# EUROPEAN PATENT APPLICATION

(11) **EP 1 798 302 A1**
(43) Date of publication of application: **20.06.2007**
(21) Application number: 04772022.2
(22) Date of filing: 23.08.2004
(51) Int. Cl.: C23C 4/00, B23K 9/04, B23K 9/00

(54) **METHOD AND EQUIPMENT FOR REPAIRING ROTOR**

(71) Applicant: KABUSHIKI KAISHA TOSHIBA, Tokyo 105-8001 (JP); Murata Boring Giken Co., Shizuoka-shi Shizuoka 4210106 (JP)
(72) Inventor: SAITO, Masahiro, Minato-Ku, Tokyo 105-8001 (JP); YOSHIOKA, Yomei, Minato-Ku, Tokyo 105-8001 (JP); CHIBA, Hideki, Minato-Ku, Tokyo 105-8001 (JP); TAKAHASHI, Shinji, Minato-Ku, Tokyo 105-8001 (JP); MIYAIKE, Kiyoshi, Minato-Ku, Tokyo 105-8001 (JP); MURATA, Shozo, Shizuoka-shi, Shizuoka 421-0106 (JP)
(74) Representative: HOFFMANN EITLE
(86) International application number: PCT/JP2004/012061
(87) International publication number: WO 2006/021983

(57) **Abstract**

A to-be-repaired damaged part, which occurs in a rotor (1), is removed and shaped by machining or grinding (S1). The shaped surface, from which the to-be-repaired damaged part is removed in the step (S1), is roughened by a blasting process (S2). A coating is formed on the surface, which is roughened in the step (S2), by a high-velocity flame spray apparatus (S3). The coating, which is formed in the step (S3), is finished by machining or polishing (S4). A defect inspection is performed to check presence/absence of a defect (S5). A dimensional/quality inspection is performed for the part repaired (S6) in the step (S5).

## Description

### Technical Field

The present invention relates to a rotor repair method and a rotor repair apparatus for repairing a rotor, which is used, for example, in a turbine generator, and a damaged part of which is repaired by forming a thermal spray coating.

### Background Art

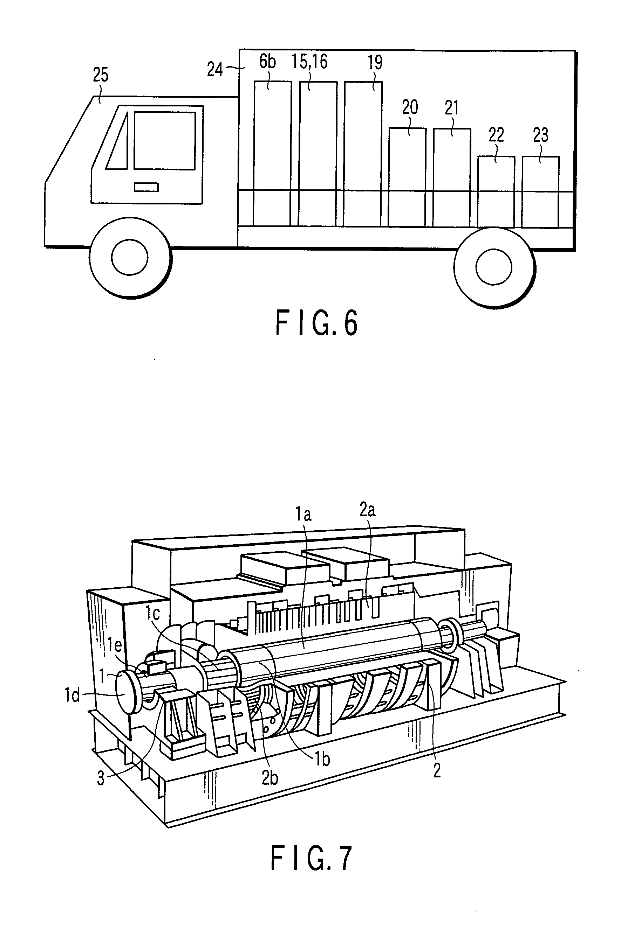

FIG. 7 is a schematic view showing the structure of a conventional turbine generator. The turbine generator generally comprises a stator 2, a rotor 1, and a journal bearing 3 that rotatably supports the rotor 1.

The stator 2 comprises a stator core 2a and a stator coil 2b that is inserted in slots formed in the stator core 2a.

The rotor 1 comprises a rotor coil 1a that is inserted in slots (not shown) formed in a rotor main body; an end ring 1b for fixing the rotor coil 1a; a fan 1c for cooling the rotor 1 and stator 2; a rotor coupling 1d that is provided at an end portion of the rotor 1 for coupling to a gas turbine or a steam turbine; and a journal 1e that is rotatably supported by the journal bearing 3.

The large-sized rotor 1 of a hydraulic turbine, a gas turbine, a steam turbine or the like, or the rotor 1 of a generator or the like, may be damaged during transportation or due to driving. Serious consideration has been given to measures for repair of the damage part, such as cutting of the damaged part of the rotor 1 by machining, and improvements of peripheral devices necessary for the repair.

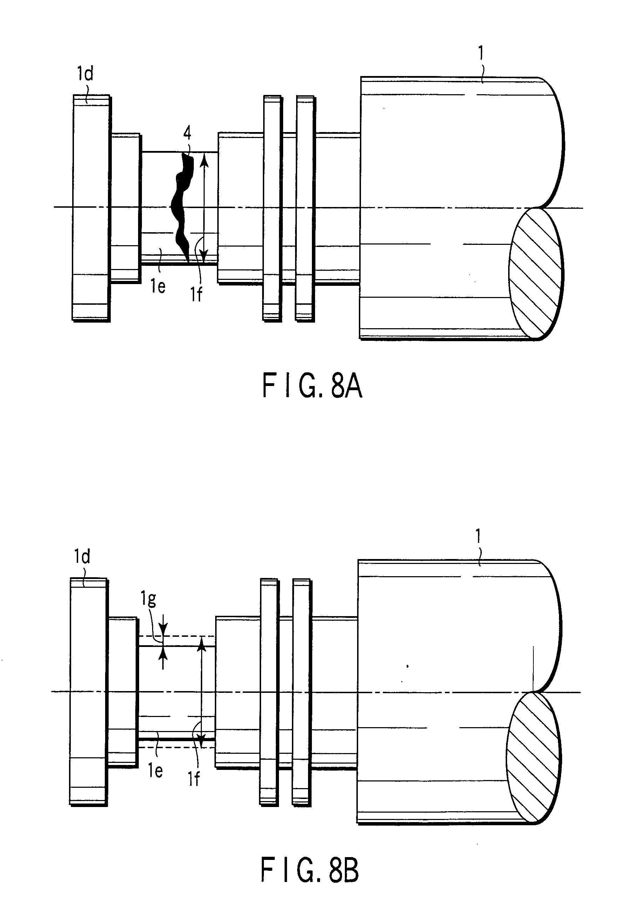

For example, as shown in FIG. 8A, a damaged part 4 may occur in the journal 1e of rotor 1, which is rotatably supported by the journal bearing 3 (not shown), due to foreign matter, abnormality in driving and the life of parts.

In this case, in order to remove the damaged part 4 in the journal 1e, the diameter 1f of the rotor (rotor diameter) is reduced by a dimension 1g by machining, etc., as shown in FIG. 8B.

The journal bearing 3 needs to be re-manufactured so as to conform to the rotor diameter 1f that is reduced by 1g. This leads to a decrease in operation rate due to long-time halt of driving, and to an increase in manufacturing cost.

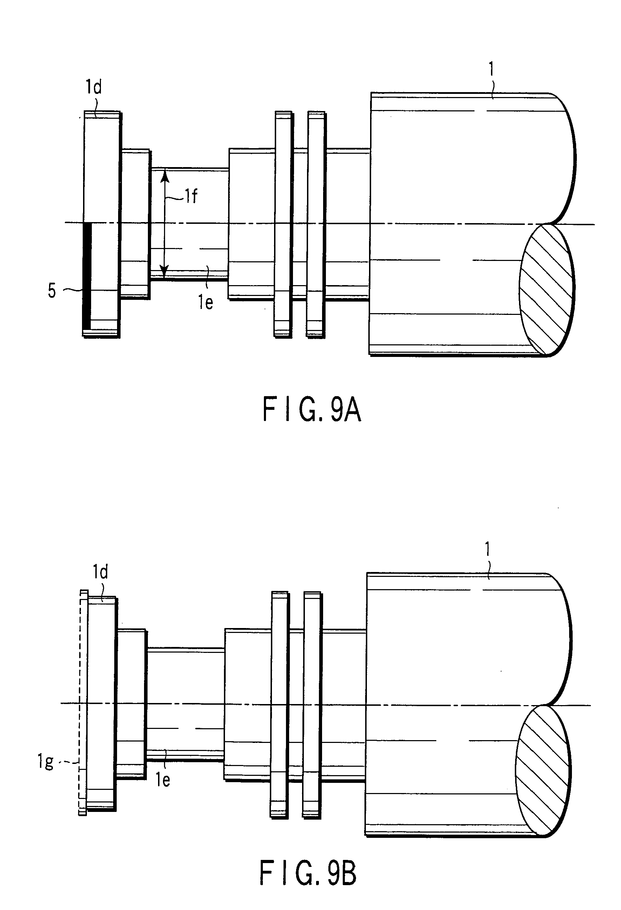

In addition, as shown in FIG. 9A, when an erroneously machined part 5 occurs in a machining process step in the manufacture of the rotor 1, design alteration or the like is performed each time such part 5 occurs, and the abnormality of the erroneously machined part 5 is eliminated by machining, etc., as shown in FIG. 9B. This may cause a decrease in performance or reliability of an apparatus using the rotor.

Repair by a high-heat-input process, such as overlaying, is a possible choice as the repair work for the damaged part 4 or erroneously machined part 5. However, since the rotor 1 rotates at high speed, it is not possible to use a repair process which may cause damage to the rotor base material. In addition, deformation may occur due to high heat input, and heat treatment, such as thermal refining, may become necessary. The heat treatment poses a serious problem from the standpoint of a decrease in repair time and repair cost.

Patent document 1 and patent document 2 (mentioned below) disclose conventional methods of manufacturing rotary bodies. The manufacturing method of patent document 1 aims at enhancing wear resistance of an oil pump or other rotary machines, without causing a gap due to a difference in thermal expansion or causing seizure at a sliding part where a casing and a rotary member are put in contact. To achieve this object, in patent document 1, a wear-resistant material, such as steel, is sprayed by a thermal spray apparatus to a contact part between a light-alloy casing and a light-alloy rotary body which is accommodated within the light-alloy casing. Thereafter, a pressing process, such as shot peening, is applied to at least an edge part of the rotary body.

The object of patent document 2 is to provide a thermal-sprayed roll on which an excellent functional thermal spray coating is formed, and which is usable as an iron-making process without the possibility of peeling of the coating. To achieve this object, a thermal spray coating with a composition of tungsten carbide (WC) and cobalt (C), which has a thickness of 20 µm to 200 µm, is formed on the surface of a roll base member. The thermal spray coating is further coated with a functional coating formed of a metal, a metal compound, a ceramic or a cermet, which mainly comprises any one or two of Mo, Ni, Cr, Co, Al, Y, Al₂O₃, Cr₃C₂ and TiO₂.

However, even if the rotor is manufactured, as disclosed in patent documents 1 and 2, the function of the thermal-spray-coated part will deteriorate and may be damaged. In these techniques, at the time of manufacture, the surface function is provided by the thermal spray coating. These techniques are not intended to repair or reproduce a damaged part by means of thermal spray coating. There is the problem that when the thermal-sprayed part or the rotary body, such as the rotor or roll, is damaged, the damaged part cannot be repaired.

Patent document 1 is Jpn. Pat. Appln. KOKAI Publication No. 4-232244. Patent document 2 is Jpn. Pat. Appln. KOKAI Publication No. 9-20975.

The present invention has been made to solve the above problem, and the invention provides a rotor repair method and a rotor repair apparatus for repairing a damaged part of a rotor, with little thermal damage to a rotor base material, while achieving a decrease in time for periodical maintenance and repair cost and enhancing the reliability of apparatus.

### Disclosure of Invention

According to the present invention corresponding to claim 1, there is provided a rotor repair method wherein a thermal spray coating is formed on a to-be-repaired damaged part of a rotor, which is rotatably supported by a bearing, by a high-velocity flame spray apparatus with a flame velocity of 600 m/sec to 3000 m/sec and with a particle velocity of 500 m/sec to 2000 m/sec, whereby the damaged part is repaired.

According to the present invention corresponding to claim 12, there is further provided a rotor repair apparatus comprising: a thermal spray unit including a thermal spray gun for forming a thermal spray coating on a to-be-repaired part of a rotor which is to be repaired, while rotating the rotor; and a driving unit which moves the thermal spray gun in a horizontal direction or in a vertical direction to a rotational axis of the rotor at a movement speed with a pitch of 0.1 mm/sec.

The present invention can provide a rotor repair method and a rotor repair apparatus for repairing a damaged part of a rotor, with little thermal damage to a rotor base material, while achieving a decrease in time for periodical maintenance and repair cost and enhancing the reliability of apparatus.

### Brief Description of Drawings

FIG. 1 is a flow chart illustrating a rotor repair method by high-velocity flame spray according to the present invention;
FIG. 2 is a structural view showing a state in which a damaged part of a rotor is repaired by a high-velocity flame spray step illustrated in FIG. 1;
FIG. 3A shows an experimental result which indicates a defect occurrence ratio at a boundary plane at a time when a coating is formed by the high-velocity flame spray step for repairing the damaged part, as illustrated in FIG. 1;
FIG. 3B is a cross-sectional view of a boundary plane in a case where the finishing angle of a corner portion at the boundary plane between a to-be-removed damaged portion and a non-damaged portion of the rotor is set to be greater than 45° in the method illustrated in FIG. 1;
FIG. 3C is a cross-sectional view of a boundary plane in a case where the angle (i.e. the finishing angle of a corner portion) of an inclined surface of a grooved part at both ends of the boundary plane between a to-be-removed damaged portion and a non-damaged portion of the rotor is set to be 45° or less (excluding 0°) in the method illustrated in FIG. 1;
FIG. 4 shows an X-ray residual stress measurement result, which indicates a residual stress in the coating in the present invention;
FIG. 5A is a front view showing the state in which the rotor is repaired by the high-velocity flame spray coating according to the invention at an on-site generation plant;
FIG. 5B is a left side view of FIG. 5A;
FIG. 5C is a right side view of FIG. 5A;
FIG. 6 is a schematic view showing the state in which a thermal spray repair system according to another embodiment of the invention, which is configured for repair of an on-site generation plant, is mounted on a movable vehicle;
FIG. 7 is a schematic view showing the structure of a conventional turbine generator;
FIG. 8A is a schematic view showing a damaged part occurring in a rotor journal which is supported by a conventional journal bearing;
FIG. 8B is a schematic view showing the state in which the damaged part occurring in the rotor journal, which is supported by the conventional journal bearing, is removed;
FIG. 9A is a schematic view showing the state in which an erroneously machined part has occurred in a machining process step at the time of manufacturing a conventional rotor; and
FIG. 9B is a schematic view showing the state in which an erroneously machined part has occurred in a machining process step at the time of manufacturing a conventional rotor.

### Best Mode for Carrying Out the Invention

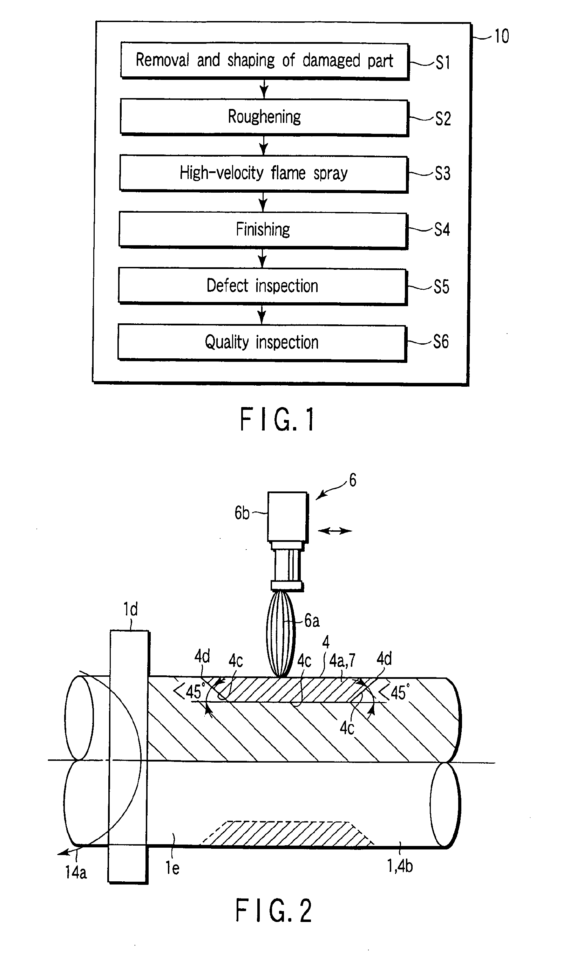

Embodiments of the present invention will now be described with reference to the accompanying drawings. FIG. 1 is a flow chart illustrating a rotor repair method 10 according to a first embodiment of the present invention. This method will be described below in detail.

In a first step S1, for example, a repair worker finds, by visual observation, a damaged part, which is to be repaired, in the journal 1e of the rotor 1. The damaged part is completely removed and shaped by machining or grinding, as will be described later.

Subsequently, in a second step S2, the shaped surface, from which the to-be-repaired damaged part is removed in the first step S1, is roughened by a blasting process using a blasting material and process conditions (to be described later).

In a third step S3, a coating is formed on the surface, which is roughened in the second step S2, by a high-velocity flame spray (HP/HVOF: High Pressure/High Velocity Oxygen Fuel) apparatus (to be described later).

In a fourth step S4, the coating, which is formed in the third step S3, is finished by machining or polishing.

In a fifth step S5, a defect inspection is performed to check presence/absence of a defect.

In a sixth step S6, a dimensional/quality inspection is performed for the part repaired in the fifth step S5.

In the first step S1, the damaged part of the rotor 1 is completely removed and shaped, in order to prevent development or enlargement of the defect due to damage in a subsequent repair step, thereby enhancing the reliability of the apparatus.

The amount of removal and the range of removal of the damaged part need to be judged on the basis of the depth of the damage occurring in the damaged part and the area of the damaged part. From the standpoint of preventing a decrease in strength and degradation in reliability, it is desirable to reduce the to-be-removed part to a minimum necessary range.

In the first step S1, when the to-be-repaired damaged part of the journal 1e is removed and shaped, the damaged part is removed, for example, in an isosceles-trapezoidal shape, as shown in a cross-sectional view of FIG. 2. Specifically, each of both axial end portions, that is, a boundary plane 4c between a to-be-removed damaged portion 4a and a non-damaged portion 4b, is shaped so as to have a bottom surface portion and an inclined surface portion. The bottom surface portion is formed parallel to the rotational axis. The inclined surface portion (sloping portion) 4d is formed at each of both end portions of the bottom surface portion, at an angle of 45° or less (excluding 0°) to an extension line including the bottom surface portion.

In the second step S2, the blasting process is performed. Thereby, the surface of the base material of the rotor 1 can uniformly be roughened, and a defect, which occurs at the boundary plane 4c when the coating is formed by the high-velocity flame spray in the third step S3, can be reduced. Further, the contact of the coating is improved, and the reliability of the spray coating repair can be enhanced.

A more advantageous effect is obtained if the boundary plane 4c between the to-be-removed damaged portion 4a and the non-damaged portion 4b is shaped so as to have inclined surface portions 4d at a low angle of 30° or 15°.

The inclined surface 4d may be replaced with an arcuate surface.

In the second step S2, the shaped surface, from which the to-be-repaired damaged part is removed in the first step S1, is roughened by the blasting process. Thereby, the spray material, which is sprayed by the high-velocity flame spray in the third step S3, firmly adheres to the surface of the rotor 1, and the close contact of the formed coating is improved.

The blasting material in the blasting process of the second step S2 is particles of alumina, silica, glass beads, light-alloy material, cork, rubber, etc. In the blasting process, an air pressure or gas pressure is set at 2 kg/cm² to 6 kg/cm² (0.2 to 0.6 MPa). This makes it possible to roughen the surface of the rotor 1 without deformation. When the surface is roughened, blasting is performed at an angle of 45° to 90° to the surface of the base material of the rotor 1. Thereby, the surface of the base material of the rotor 1 can be roughened three-dimensionally, and the close contact of the coating can be improved.

In the third step S3, the coating is formed using the high-velocity flame spray apparatus. Thereby, the spray material is sprayed at a velocity which is two times or three times higher than the acoustic velocity, the spray material is caused to impinge upon the surface of the base material of the rotor 1 at high velocity, and the coating is formed. With use of the high-velocity flame spray apparatus, it becomes possible to obtain a coating with less pores, high density, high adhesion and high interparticle coupling force, and to enhance the reliability of the apparatus by repair. In addition, if the spray material is sprayed at a velocity which is two times or three times higher than the acoustic velocity, the spray material is caused to impinge upon the surface of the base material of the rotor 1 at high velocity and the coating is formed, a compressive residual stress occurs in the coating due to a peening effect and a crack or peeling of the coating can be reduced. Furthermore, the coating with a thickness of 8.0 mm or more at maximum can be formed.

When the third step S3 is performed, the high-velocity flame stray is performed at an angle of 45° to 90° to the surface of the base material of the rotor 1. Thereby, the close contact of the coating on the base material of the rotor 1 can be improved, and it is possible to obtain the coating with less pores, high density and high interparticle coupling force.

In the fourth step S4, the spray coating, which is formed in the third step S3, is finished by machining or polishing. Thereby, the diameter of the rotor at the repaired part, which is provided with the coating by the high-velocity flame spray in the third step S3 so that the rotor may have a greater diameter than the initial diameter (e.g. 1f in FIG. 8 or 9), is restored to the initial rotor diameter 1f. In addition, the surface roughness of the rotor 1 is restored to the design value. At this time, the reliability is remarkably enhanced by performing finishing so that no stepped part is formed at the boundary plane between the repaired part and the surface of the base material of the rotor 1.

The defect inspection in the fifth step S5 for checking the presence/absence of a defect and the dimensional/quality inspection in the sixth step S6 for the repaired part are necessary steps for providing a non-defective product. A defect facilitates peeling of the coating or running of a crack, and is a factor that degrades the performance of the repaired part. By eliminating a defect at the repaired part, the reliability of the repaired product can be improved.

FIG. 2 illustrates the high-velocity flame spray in the third step S3 in FIG. 1. FIG. 2 shows the state in which the damaged part 4 of the rotor 1, which is rotatably supported by the journal bearing 3 shown in FIG. 7 or a thrust bearing (not shown), is repaired by using a high-velocity flame spray apparatus 6, which is described below. The high-velocity flame spray apparatus 6 includes a spray gun 6b which is capable of adjusting the velocity of a flame 6a at 600 m/sec to 3000 m/sec, and the velocity of particles at 500 m/sec to 2000 m/sec.

The conditions for the high-velocity flame spray in the third step S3 are as follows. For instance, a spray apparatus 6 which is manufactured by TAFA (model No. JP5000) is used. The base material of the rotor is NiCrMoV steel. The coating, that is, spray powder, is NiCrMoV steel. Fuel is kerosene and oxygen. A 4-inch gun barrel is provided. The flow rate of oxygen is 1850 scfh (870 l/min). The supply amount of kerosene fuel is 5.7 gph (22 1/hr). The combustion pressure is 97 psi (0.7 MPa). The velocity of movement of the gun is 350 mm/sec. The powder supply amount is 40 g/min, and the distance for spraying is 380 mm.

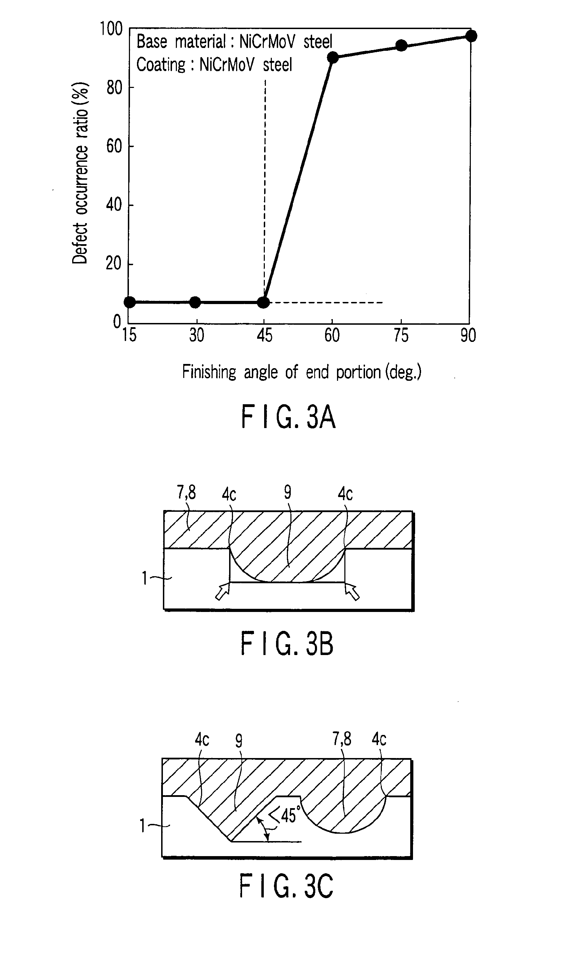

In the case where the rotor is repaired under the above-described conditions, when the damaged part is removed and shaped by machining or grinding in the first step, the boundary plane 4c between the to-be-removed damaged portion 4a and the non-damaged portion 4b is shaped so as to have the inclined surface 4d, or an arcuate surface, at an angle of 45° or less (excluding 0°). Thereby, as shown in FIG. 3, the defect occurrence ratio of the boundary plane 4c can be reduced when the coating is formed by the high-velocity flame spray.

Specifically, FIG. 3A shows the defect occurrence ratio of the boundary plane 4c at the time when the coating is formed by the high-velocity flame spray apparatus 6 (i.e. the defect occurrence ratio at 5 measurement points on the corner portion of repaired part 9). On the other hand, FIG. 3B is a cross-sectional view of the boundary plane 4c in the case where the finishing angle of the corner portion at the boundary plane between the to-be-removed damaged portion 4a of the damaged part 4 and the non-damaged portion 4b is set to be greater than 45°. In this case, a defect occurs at the corner portion (indicated by arrows).

FIG. 3C is a cross-sectional view of the boundary plane 4c in the case where the angle (i.e. the finishing angle of the corner portion) of the inclined surface 4d of the grooved part at both ends of the boundary plane 4c between the to-be-removed damaged portion 4a of the damaged part and the non-damaged portion 4b is set to be 45° or less (excluding 0°). In this case, no defect occurs at the corner portion. In FIG. 3B and FIG. 3C, numeral 7 denotes a spray material that is sprayed at the to-be-removed portion 4a, numeral 8 denotes the sprayed coating, and numeral 9 denotes the repaired part.

As is clearly understood from FIG. 3, if the corner portion of the repaired part 9 is formed to have the inclined surface with the angle of 45° or less (excluding 0°) or the arcuate surface, the defect occurrence ratio is decreased to 10% or less, and a defect will hardly occur. Thus, the defect occurrence ratio can be reduced, the close contact of the spray coating can be improved, and the reliability of repair by thermal spray can be enhanced.

By contrast, if the angle of the inclined surface of the corner portion is set to be greater than 45°, the defect occurrence ratio increases to 80% or more, and a considerable number of defects will occur at the corner portion.

The spray material 7 that is used is a coating material having a similar chemical composition and material characteristic to the rotor 1 to be repaired. In the repair 10 of the rotor 1, the spray coating 8 is formed in a range of 0.020 mm to 8.0 mm. The surface of the coating is machined or polished to have a surface roughness of 6.5 S or less (excluding 0 S; S represents finishing roughness) and to have a predetermined thickness.

The reason why the coating material having the similar chemical composition and material characteristic to the to-be-repaired rotor 1 is used is that deformation due to stress or heat occurring in the repaired part 9 of the rotor 1 has to be prevented during the halt of driving, during driving and during abnormal driving. As regards the sliding characteristics, a performance similar to the material of the rotor 1 can be obtained. Specifically, if a material different from the base material of the rotor 1 is used for the repaired part 9, deformation or thermal stress occurs due to a difference in thermal expansion coefficient or thermal conductivity. This leads to occurrence of vibration at the time of rotation of the rotor 1, and considerably degrades the reliability of the apparatus. If a thick film can be formed by high-velocity flame spray, the same shaping function as with overlaying can be attained, and the damaged part 4 or the erroneously machined part 5 can easily be repaired without causing damage to the base material of the rotor 1.

In the fourth step S4, the spray coating 8, which is formed in the third step S3, is finished by machining or polishing. Thereby, the diameter of the rotor at the repaired part 9, which is provided with the spray coating 8 by the high-velocity flame spray so that the rotor may have a greater diameter than the initial rotor diameter 1f in consideration of mechanical finishing, is restored to the initial rotor diameter 1f, as shown in FIG. 7 and FIG. 8. In addition, the surface roughness of the rotor 1 is restored to a design value of 6 S or less. At this time, the finishing needs to be performed so that no stepped part is formed at the boundary plane 4c between the repaired part 9 and the surface of the base material of the rotor 1.

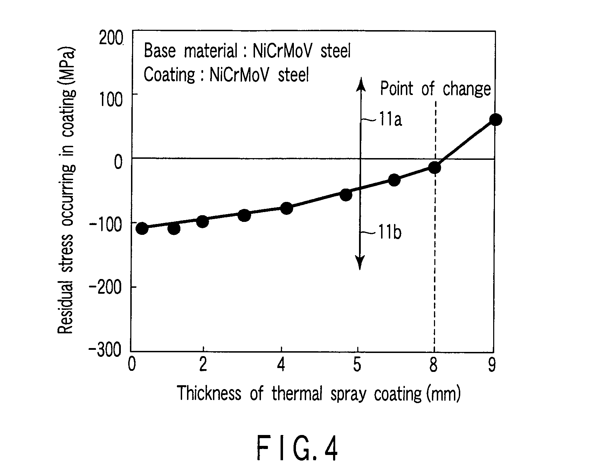

As regards the thickness of the coating at the time of repair, as shown in the X-ray residual stress measurement result in FIG. 4, the coating has a compressive residual stress 11b up to 8.0 mm. At 8.0 mm or more, the residual stress 11 of the coating changes to a tensile residual stress 11a. It is understood that on the tensile stress side, peeling or cracking of the coating occurs, and the thick film cannot be formed. In the current situation, the maximum thickness is 8.0 mm, and the thick film can be formed in this range.

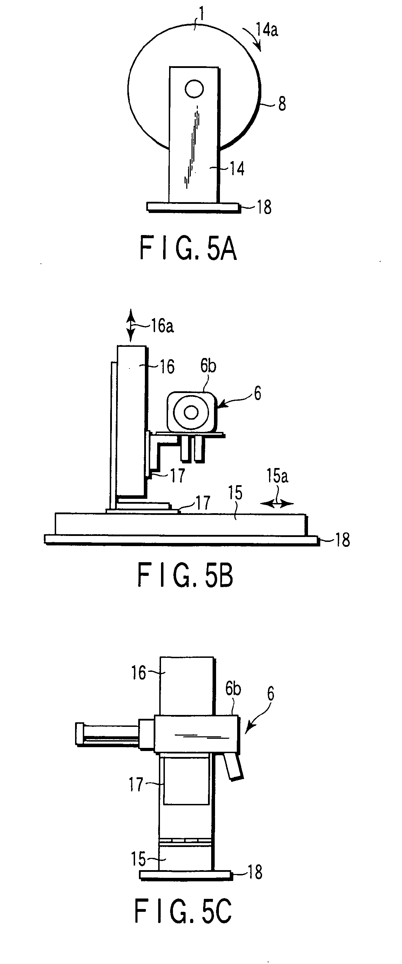

FIG. 5 is a view for describing a second embodiment of the present invention. The repair method 10 for the rotor 1 by the high-velocity spray apparatus 6 in the third step S3 is implemented at one of the location of a generation plant on the site (a turbine generator including a rotor to be repaired) and the location of a repair factory, or at the location where these are disposed together. FIG. 5A is a front view, FIG. 5B is a left side view of FIG. 5A, and FIG. 5C is a right side view of FIG. 5A. The structure shown comprises a rotor 1 to be repaired at the site; a rotor driving unit 14; a high-velocity flame spray apparatus 6 including a spray gun 6b for forming a spray coating 8; a horizontal spray gun driving unit 15 for moving the spray gun 6b in a direction horizontal to the rotational axis of the rotor 1; and a vertical spray gun driving unit 16 for moving the spray gun 6b in a direction perpendicular to the rotational axis of the rotor 1. Depending on uses, the high-velocity flame spray apparatus 6 may not be provided with the vertical spray gun driving unit 16 of the horizontal spray gun driving unit 15 and vertical spray gun driving unit 16.

The repair method 10 for the rotor 1 is normally implemented at an assembly factory. However, if repair is performed at the on-site generation plant where the to-be-repaired apparatus is installed, the time period for repair and the cost for repair can be reduced.

In usual cases, when repair is performed at the assembly factory, the to-be-repaired object is packaged and transported from the generation plant. A serious problem arises when the to-be-repaired object is transported, in particular, from a foreign country, although a similar problem arises with domestic transportation. When the to-be-repaired object is transported from a foreign country to the assembly factory, a time period of, e.g. more than two months at maximum is required from the packing, transportation and customs clearance to the beginning of repair. The operation rate decreases due to the halt of the operation of the plant. As regards the repair that can be performed at the on-site plant, it is effective to perform the repair at the on-site generation plant. Only the indispensable, necessary repair items are conducted in the repair factory or assembly factory. Thereby, in the case of the on-site repair, the repair can be completed within two weeks at most.

In the case where the rotor 1 is repaired at the assembly factory, the thermal spray equipment, which is installed as factory equipment, can be used. The thermal spray equipment installed at the factor includes a sound-proof chamber, a spraying robot, a control unit, a dust collecting unit, a cooling water chiller, a crane, and a rotor driving unit.

However, at the on-site generation plant, spraying equipment for repair is rarely installed. Thus, when the rotor 1 is to be repaired at the on-site generation plant, it is necessary to transport to the on-site generation plant such components as a sound-proof chamber, a spray robot, a control unit, a dust collecting unit, a cooling water chiller, a crane and a rotor driving unit, and to assemble them at the site.

However, the sizes of the sound-proof chamber, spray robot, control unit, dust collecting unit and rotor driving unit are large and are of the factory-installation type. There are restrictions to the transportation of them to the on-site generation plant, and such transportation is difficult in many cases.

Under the circumstances, it is necessary to provide devices which can be substituted for the spraying equipment capable of repairing the rotor 1 at the on-site generation plant, in particular, for the spraying robot.

FIG. 5 shows repair equipment which is substituted for the factory-installed spraying robot when the spray coating 8 is formed for repair. When repair is conducted, the spray gun 6b is fixed to the spray gun driving units 15 and 16 which can arbitrarily move the spray gun 6b in the horizontal direction 15a and vertical direction 16a relative to the rotational axis of the rotor 1.

The robot is used if it can be transported to the on-site generation plant as the equipment capable of arbitrarily moving the spray gun in the horizontal direction 15a and vertical direction 16a. If the robot cannot be transported, the spray gun driving units 15 and 16, which use the driving mechanisms including ball screws and stepping motors, are employed.

In this case, the equipment used is configured to include a spray gun movement table 17 which moves the spray gun 6b in the horizontal direction 15a and vertical direction 16a relative to the rotational axis of the rotor 1, and configured to be able to control the spray gun movement speed with a pitch of 0.1 mm/sec. Moreover, while the rotor 1 is being rotated in a direction of arrow 14a shown in FIG. 5A, the spray gun 6b is moved in the horizontal direction 15a to perform repair by thermal spray.

When the rotor 1 is to be repaired at the on-site generation plant, the repair is performed by fixing the spray gun 6b to the spray gun driving units 15 and 16 which can arbitrarily move the spray gun 6b in the horizontal direction 15a and vertical direction 16a relative to the rotational axis. Thereby, even in the case where the to-be-repaired part 9 of the rotor 1 is not specified, the spray gun 6a can be moved to an arbitrary position, and an optimal range for repair can arbitrarily be set. In particular, in the case of moving the spray gun in the vertical direction 16a, it is necessary to set the spray gun 6b at the center of the rotor diameter 1f. The adjustment can be performed in units of mm, and thermal spray repair with high -precision can advantageously be performed.

At the time of thermal spray repair, the spray gun 6b is moved in the horizontal direction 15a while the rotor 1 is being rotated (arrow 14a). This aims at uniformly forming the spray coating 8 on the outer peripheral surface of the rotor 1.

In general, in the case of planar thermal spray, the spray gun 6b is fixed to the robot arm, and the arm of the robot is moved to perform spraying. However, in the case of performing spray on a cylindrical surface, it is difficult to perform spray while rotating the arm of the robot in the direction of arrow 14a. It is thus necessary to perform spray by rotating the cylindrical to-be-sprayed object itself in the direction of arrow 14a. Consequently, in the case of repair at the on-site generation plant, the rotor 1 is rotated in the direction of arrow 14a by the device capable of rotating the rotor 1 in the direction of arrow 14a, for example, a rotating device having a rotating mechanism such as a lathe. Thus, the surface of the to-be-repaired part 9 of the rotor 1 is repaired. Thereby, the spray coating to be formed can uniformly formed on the outer periphery of the rotor 1, and the reliability of repair can be enhanced.

The spray gun driving units 15 and 16 using the driving mechanisms including the ball screws and stepping motors are used. Thereby, the spray gun movement speed can be controlled with a pitch of 0.1 mm/sec, and the spray gun 6b can continuously and stably be moved while wobbling or vibration of the spray gun 6b during movement can be prevented.

In order to set the spray gun movement speed within the normal range of 250 to 400 mm/sec., it is necessary to alter the rotational speed of the to-be-repaired rotor 1 and the spray gun movement speed each time the diameter 1f of the to-be-repaired rotor is varied. At this time, by controlling the spray gun movement speed with a pitch of 1 mm/sec, no problem arises with almost all values of the rotor diameter 1f.

FIG. 6 shows a third embodiment of the invention which relates to repair at the one-site generation plant. A thermal spray repair system 24, which comprises a spray gun 6b, spray gun driving units 15 and 16, a simplified sound-proof chamber 19, a cooling water chamber 20, a dust collecting unit 21, a generator 22 and a blasting unit 23, is mounted on a movable vehicle 25, so that repair 10 may be performed on the site with ease.

By simply transporting the thermal spray repair system 24 mounted on the vehicle 10, it becomes unnecessary to consume a great deal of labor in arranging for traffic means or transporting means both at domestic areas with inconvenient transportation means and at foreign countries. Repair work for the on-site generation plant can be conducted within a short time period.

### Industrial Applicability

The present invention is usable in repairing a rotor of a hydraulic turbine, a gas turbine, a steam turbine, etc., or a rotor of a generator, etc.

## Claims

1. A rotor repair method **characterized in that** a thermal spray coating is formed on a to-be-repaired damaged part of a rotor, which is rotatably supported by a bearing, by a high-velocity flame spray apparatus with a flame velocity of 600 m/sec to 3000 m/sec and with a particle velocity of 500 m/sec to 2000 m/sec, whereby the damaged part is repaired.

2. The rotor repair method according to claim 1, **characterized in that** when the thermal spray coating is formed on the damaged part of the rotor and the damaged part is repaired, a thermal spray repair material, which has a chemical composition and material characteristics similar to the damaged part of the rotor, is used.

3. The rotor repair method according to claim 1, **characterized in that** when the thermal spray coating is formed on the damaged part of the rotor and the damaged part is repaired, the thermal spray coating in a range of 0.05 mm to 8.0 mm is formed on the to-be-repaired part of the rotor.

4. The rotor repair method according to claim 1, **characterized in that** when the thermal spray coating is formed on the damaged part of the rotor and the damaged part is repaired, the to-be-repaired part is subjected in advance to a surface formation process by machining or grinding, and the to-be-repaired part is roughened by a blasting process.

5. The rotor repair method according to claim 4, **characterized in that** when the to-be-repaired part is subjected to the surface formation process by machining or grinding, a shape of a groove at both ends of the repaired part is formed to have an inclined surface at 45° or less (excluding 0°) or an arcuate surface.

6. The rotor repair method according to claim 1, **characterized in that** when the thermal spray coating is formed on the damaged part of the rotor and the damaged part is repaired, a surface of the formed coating is finished in advance to have a surface roughness of 6.5 S or less (excluding 0 S) by machining or polishing.

7. The rotor repair method according to claim 1, **characterized in that** when the thermal spray coating is formed on the damaged part of the rotor and the damaged part is repaired, repair is performed at one of a location of a generation plant, in which the rotor is disposed, and a location of a repair factory, or at a location where the generation plant and the repair factory are disposed together.

8. The rotor repair method according to claim 1, **characterized in that** when the thermal spray coating is formed on the damaged part of the rotor and the damaged part is repaired, thermal spray is performed by horizontally moving a thermal spray gun of the high-velocity flame spray apparatus while the rotor is being rotated.

9. The rotor repair method according to claim 1, **characterized in that** when the thermal spray coating is formed on the damaged part of the rotor and the damaged part is repaired, repair is performed by fixing a thermal spray gun of the high-velocity flame spray apparatus to equipment capable of arbitrarily moving the thermal spray gun of the high-velocity flame spray apparatus in a horizontal direction and a perpendicular direction to a rotational axis of the rotor.

10. The rotor repair method according to claim 9, **characterized in that** a robot or a driving mechanism including a ball screw and a stepping motor is used as the equipment capable of arbitrarily moving the thermal spray gun of the high-velocity flame spray apparatus in the horizontal direction and perpendicular direction.

11. The rotor repair method according to claim 10, **characterized in that** when the thermal spray gun is moved in the horizontal direction and vertical direction to the rotational axis of the rotor, the movement is controlled with a movement speed of a pitch of 0.1 mm/sec.

12. A rotor repair apparatus comprising:
a thermal spray unit including a thermal spray gun for forming a thermal spray coating on a to-be-repaired part of a rotor which is to be repaired, while rotating the rotor; and
a driving unit which moves the thermal spray gun in a horizontal direction or in a vertical direction to a rotational axis of the rotor at a movement speed with a pitch of 0.1 mm/sec.
